# EUROPEAN PATENT APPLICATION

(11) **EP 2 654 097 A1**
(43) Date of publication of application: **23.10.2013**
(21) Application number: 12185807.0
(22) Date of filing: 25.09.2012
(51) Int. Cl.: H01M 2/02, H01M 2/04, H01M 10/42, H01M 10/04

(54) **Rechargeable battery**

(30) Priority: 19.04.2012 US 201261635543 P; 14.09.2012 US 201213618706
(71) Applicant: Samsung SDI Co., Ltd., Yongin-si, Gyeonggi-do (KR)
(72) Inventor: Hur, Jong-Hwa, Gyeonggi-do (KR); Heo, Sang-Do, Gyeonggi-do (KR)
(74) Representative: Walaski, Jan Filip

(57) **Abstract**

A rechargeable battery comprises an electrode assembly, a case for receiving the electrode assembly and a protective circuit module for closing an opening of the case comprising a circuit board having a protective element mounted thereto and a metal member coupled to the opening of the case to seal the case.

## Description

The described technology relates generally to a rechargeable battery. More particularly, the described technology relates to a rechargeable battery including a protective circuit module.

Unlike a primary battery that is incapable of being recharged, a rechargeable battery can be repeatedly charged and discharged. A low capacity rechargeable battery has been used for small electronic devices such as a mobile phone, a laptop computer, and a camcorder, and a large capacity battery has been widely used as a power source for driving a motor of a hybrid vehicle.

A representative rechargeable battery includes a nickel-cadmium (Ni-Cd) battery, a nickel-hydrogen (Ni-MH) battery, a lithium (Li) battery, and a lithium ion (Li-ion) rechargeable battery. Particularly, the lithium ion secondary battery has a higher operation voltage than the nickel-cadmium battery or the nickel-hydrogen battery that is mainly used as a portable electric equipment power source by about three times. Also, the lithium ion secondary battery is widely used in an aspect that energy density per unit weight is high.

The rechargeable battery mainly uses a lithium-based oxide as a positive active material and a carbon material as a negative active material. In general, the rechargeable battery is classified into a liquid electrolyte battery and a polymer electrolyte battery according to the type of electrolyte, and the battery using the liquid electrolyte is referred to as a lithium ion battery, while the battery using the polymer electrolyte is referred to as a lithium polymer battery.

This rechargeable battery is installed with a protective circuit module that controls charge and discharge. The protective circuit module prevents an overcharge and an over-discharge of the rechargeable battery, thereby improving safety and cycle-life of the rechargeable battery.

To mount the protective circuit module to the rechargeable battery, a protective circuit substrate must be enclosed and fixed by using an insulator and a tab case such that the number of elements is increased and an assembly process is complicated.

The present invention provides a rechargeable battery simplifying an assembly process.

According to an aspect of the invention, there is provided a rechargeable battery comprising an electrode assembly, a case for receiving the electrode assembly and a protective circuit module for closing an opening of the case comprising a circuit board having a protective element mounted thereto and a metal member coupled to the opening of the case to seal the case. The metal member may be arranged around a periphery of the circuit board.

The protective circuit module can therefore itself be used to close the case, without using a top cap.

The rechargeable battery may further comprise a resin layer covering the protective element and a first surface of the circuit board to which the protective element is mounted, the first surface facing the electrode assembly.

The rechargeable battery may further comprise an electrolyte solution injecting inlet passing through the circuit board and the resin layer.

The circuit board may comprise first and second plates and the metal member may comprise a metal layer arranged between the plates. The metal layer may protrude beyond edges of the circuit board for connection to an exposed edge of the case.

The metal member may comprise an insert around the periphery of the circuit board, wherein a portion of the insert protrudes beyond edges of the circuit board for connection to an exposed edge of the case.

The metal member may be a substantially planar member fixed to a second surface of the circuit board opposite the first surface and protruding beyond the periphery of the circuit board for connection to an exposed top edge of the case.

The resin layer may cover the first surface of the circuit board and side surfaces of the circuit board. The rechargeable battery may comprise a second resin layer on the second surface of the circuit board and the planar metal member.

The metal member may be formed on a first surface of the circuit board facing the electrode assembly, the edge of the metal member not extending beyond the edge of the circuit board. The metal member may comprise a pattern etched on the circuit board or a metal plate mounted to the circuit board.

The metal member and the case may comprise the same material.

The rechargeable battery may comprise electrode leads protruding through the resin for connection to electrode tabs of the electrode assembly.

According to an exemplary embodiment, the assembly process of the rechargeable battery is simplified, and combination of the protective circuit module and the case is easy.

Embodiments of the invention will now be described by way of example with reference to the accompanying drawings, in which:
FIG. 1 is an exploded perspective view of a rechargeable battery according to the first exemplary embodiment of the present invention.
FIG. 2 is a perspective view of a rechargeable battery according to the first exemplary embodiment of the present invention.
FIG. 3 is a cross-sectional view taken along the line III-III of FIG. 2.
FIG. 4 is a cross-sectional view of a protective circuit module according to the first exemplary embodiment of the present invention.
FIG. 5 is a cross-sectional view of a protective circuit module according to the second exemplary embodiment of the present invention.
FIG. 6 is a cross-sectional view of a protective circuit module according to the third exemplary embodiment of the present invention.
FIG. 7 is a cross-sectional view of a rechargeable battery according to the third exemplary embodiment of the present invention.
FIG. 8 is a cross-sectional view of a protective circuit module according to an exemplary variation of the third exemplary embodiment of the present invention.
FIG. 9 is a cross-sectional view of a protective circuit module according to the fourth exemplary embodiment of the present invention.
FIG. 10 is a cross-sectional view of a protective circuit module according to the fifth exemplary embodiment of the present invention.
FIG. 11 is an exploded perspective view of a rechargeable battery according to the fifth exemplary embodiment of the present invention.

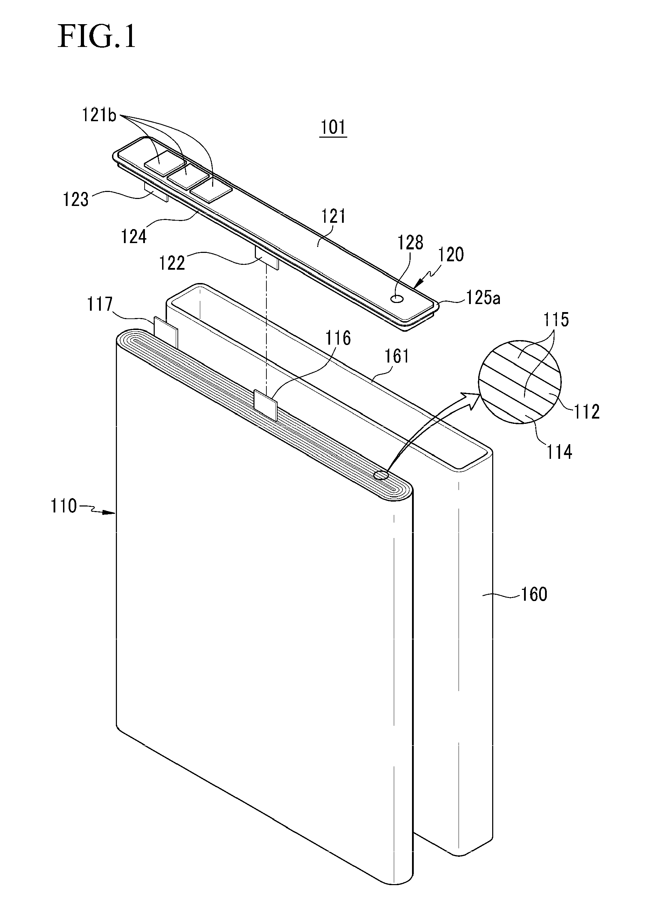

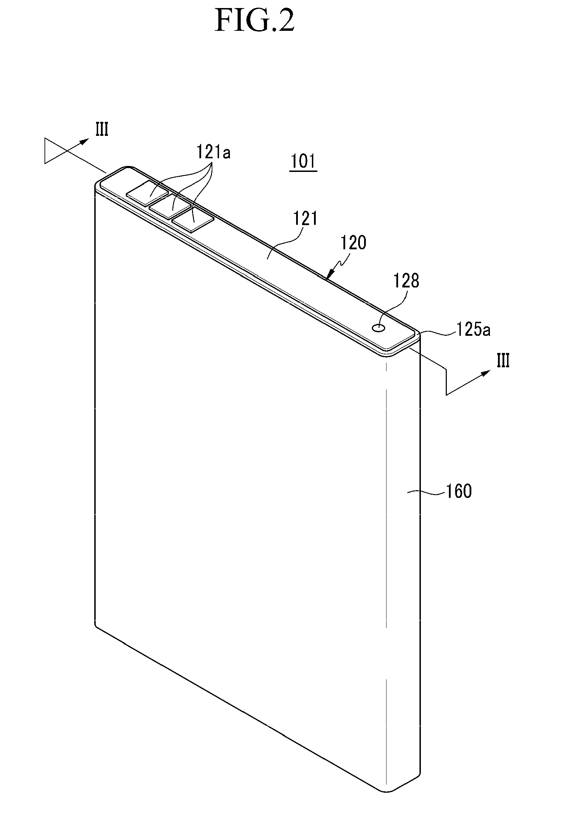

Referring to FIG. 1 and FIG. 2, a rechargeable battery 101 according to the present exemplary embodiment includes an electrode assembly 110, a protective circuit module 120, and a case 160 connected to the protective circuit module 120.

The electrode assembly 110 is formed in a structure in which a positive electrode 112, a negative electrode 114, and a separator 115 interposed between the positive electrode 112 and the negative electrode 114 is spiral-wound. However, the present invention is not limited thereto, and the electrode assembly may be formed in a structure in which the positive electrode and the negative electrode are deposited via the separator interposed therebetween. The positive electrode 112 is fixed and installed with a positive electrode tab 116, and the negative electrode 114 is fixed and installed with a negative electrode tab 117.

The protective circuit module 120 includes a circuit board 121, a first lead tab, or electrode lead, 122, and a second lead tab 123. The protective circuit module 120 is connected to the electrode assembly 110 to control an operation of the electrode assembly 110 including a charge and discharge.

The first lead tab 122 is made of an electrically conductive material such as nickel and is electrically connected to the circuit board 121. The first lead tab 122 electrically connects the circuit board 121 to the electrode assembly 110 and is installed at the center of the first surface of the circuit board 121. The first lead tab 122 is connected to the positive electrode tab 116 of the electrode assembly 110 by welding.

The second lead tab 123 is positioned at one end in a length direction of the circuit board 121 and electrically connects the circuit board 121 to the electrode assembly 110. The second lead tab 123 is also made of an electrically conductive material such as nickel and is connected to the negative electrode tab 117 by welding.

The circuit board 121 is a printed circuit board on which a wiring pattern is printed and is made of a thin plate in the shape of a rectangle extended in one direction.

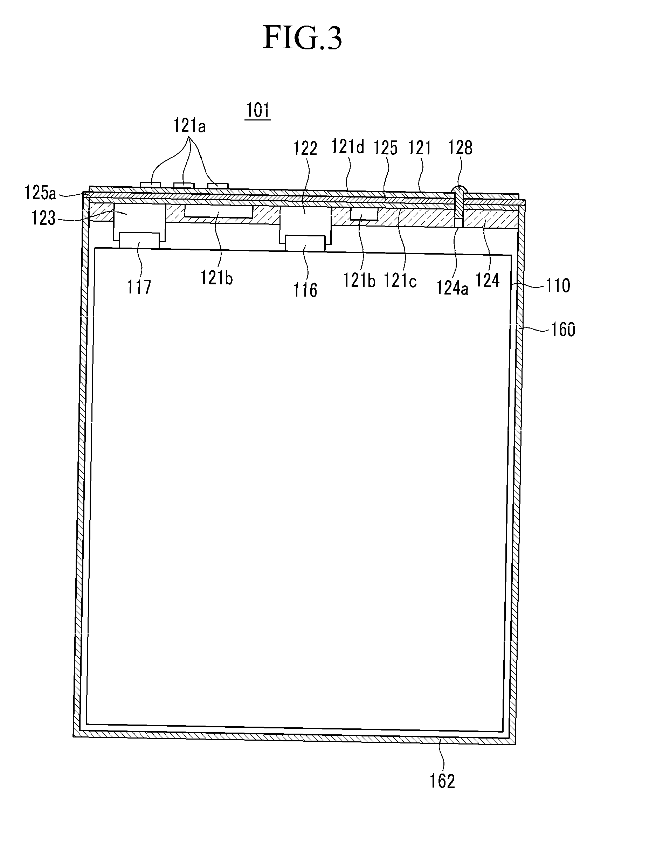

As shown in FIG. 3, a protective element 121b is mounted to a first surface 121c of the circuit board 121. The protective element 121b is made of a control IC, and is an element such as a charge and discharge switch. Here, the first surface 121c is a surface toward the electrode assembly. Also, an outer terminal 121a electrically connected to an external load or a charger is provided at a second surface 121d of the circuit board 121.

A metal part or member 125a formed along a circumference direction of the circuit board 121 is formed as the edge of the protective circuit module 120. The circuit board 121 is made of the plate in the shape of a rectangle, and the metal part 125a protrudes from the side end of the circuit board 121 to the outside thereby forming an approximate rectangular shape while ringing, or surrounding, it ie. while being arranged around the periphery of the circuit board. The metal part 125a is combined to an opening 161 formed in the case 160 by welding, thereby sealing the case 160.

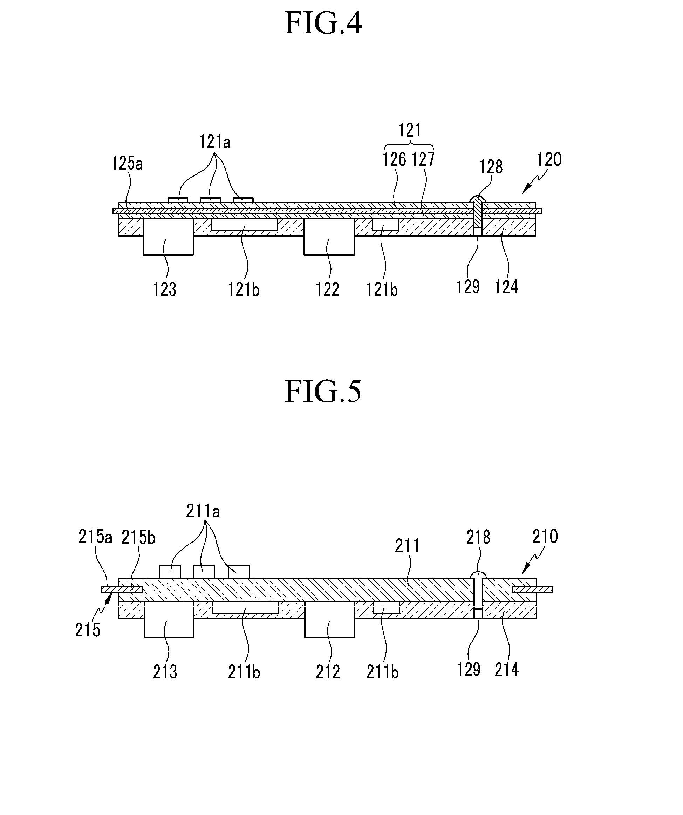

As shown in FIG. 4, the protective circuit module 120 includes a first plate 126 disposed at an upper side, a second plate 127 disposed under the first plate 126, and the metal member, or layer, 125 with the plate shape disposed between the first plate 126 and the second plate 127. The first plate 126 and the second plate 127 are disposed to face to each other, and the metal member 125 is inserted and disposed between the first plate 126 and the second plate 127. Here, the first plate 126 and the second plate 127 become the circuit board 121.

The metal member 125 is inserted between the first plate 126 and the second plate 127 in the manufacturing process of the circuit board 121, and is integrally formed with the circuit board 121. The metal member 125 is made with the same material as the case 160, and the metal member 125 according to the present exemplary embodiment may be made of aluminum. The metal part 125a is integrally formed with the metal member 125 and is formed according to the side end of the metal member 125.

Also, the protective circuit module 120 includes the protective element 121b and a resin layer 124 covering a lower surface of the circuit board 121. A resin layer 124 is formed by insert molding, and is formed to cover the protective element 121b and the lower surface of the circuit board 121 in a state when the circuit board 121 is installed. The first lead tab 122 and the second lead tab 123 are installed to protrude under the resin layer 124, and the metal part 125a is installed to protrude further to the outside than the resin layer 124.

Meanwhile, the protective circuit module 120 includes an electrolyte solution injecting inlet 129 for injecting the electrolyte solution, and the electrolyte solution injecting inlet 129 is formed to pass through the circuit board 121 and the resin layer 124. The electrolyte solution injecting inlet 129 is installed with a sealing valve 128 sealing the electrolyte solution injecting inlet 129.

The case 160 includes a space receiving the electrode assembly 110, and the opening 161 is formed at the upper portion. The case 160 is made as a cuboid having a bottom 162. Also, the case 160 is made of a metal material and may be made of a metal including aluminum.

The opening 161 into which the electrode assembly 110 is injected is formed at the upper end of the case 160, and the metal part 125a is combined to the opening 161. The metal part 125a and the case 160 are both made of the metal including aluminum such that the metal part 125a is easily welded to the case 160, thereby stably sealing the case 160.

In the present exemplary embodiment, the protective circuit module 120 is integrally formed when forming the resin layer 124 such that the assembly of the protective circuit module 120 and the case 160 may be simplified, and the protective element 121b and the circuit board 121 may be stably protected from the electrolyte solution.

Also, if the metal part 125a is combined to the case 160 by the welding, the case 160 is stably sealed such that leakage of the inner electrolyte solution may be prevented. FIG. 5 is a cross-sectional view of a protective circuit module according to the second exemplary embodiment of the present invention.

Referring to FIG. 5, a rechargeable battery according to the present exemplary embodiment is formed to have the same the structure as that of the rechargeable battery of the first exemplary embodiment except for the structure of a protective circuit module 210 such that the overlapping description is omitted.

The protective circuit module 210 according to the present exemplary embodiment includes a circuit board 211 and a metal member 215 inserted in the side end of the circuit board 211.

A first lead tab 212, a second lead tab 213, an outer terminal 211a, and a protective element 211b are installed at the circuit board 211. The metal member 225 includes a metal part 215a protruding outside the circuit board 211 and a supporting part 215b inserted in the circuit board 211. The metal member 225 is inserted and installed toward the inner side from the side of the circuit board 211.

The circuit board 211 has an approximate rectangle shape and the metal member 215 has a rectangular shape ringing it. The metal part 215a is formed alone the circumference of the circuit board 211 and protrudes outside along the side end of the circuit board 211. The metal member 215 is installed to be partially inserted to the circuit board 211 in the manufacturing process of the circuit board 211. The metal part 215a is fixed to the opening of the case 160 by a method such as welding or melting to close and seal the case 160.

Also, the protective circuit module 210 includes a resin layer 214 covering the protective element 211b and the lower surface of the circuit board 211. The resin layer 124 is formed by insert molding, and the resin layer 124 is formed to cover the protective element 121b and the lower surface of the circuit board 121 when installing the circuit board 121. The first lead tab 212 and the second lead tab 213 installed to the circuit board 211 protrude under the resin layer 214, and the metal part 215a is installed to protrude further to the outside than the resin layer 214.

Meanwhile, the protective circuit module 210 includes an electrolyte solution injecting inlet 129 for injecting the electrolyte solution, and the electrolyte solution injecting inlet 129 is formed to pass through the circuit board 211 and the resin layer 214. The electrolyte solution injecting inlet 129 is installed with a sealing valve 218 sealing the electrolyte solution injecting inlet 129.

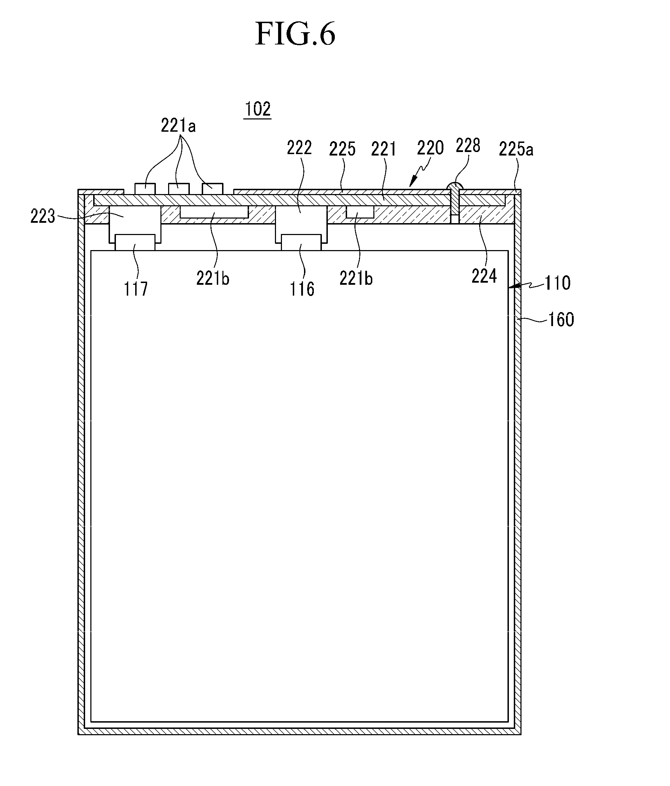

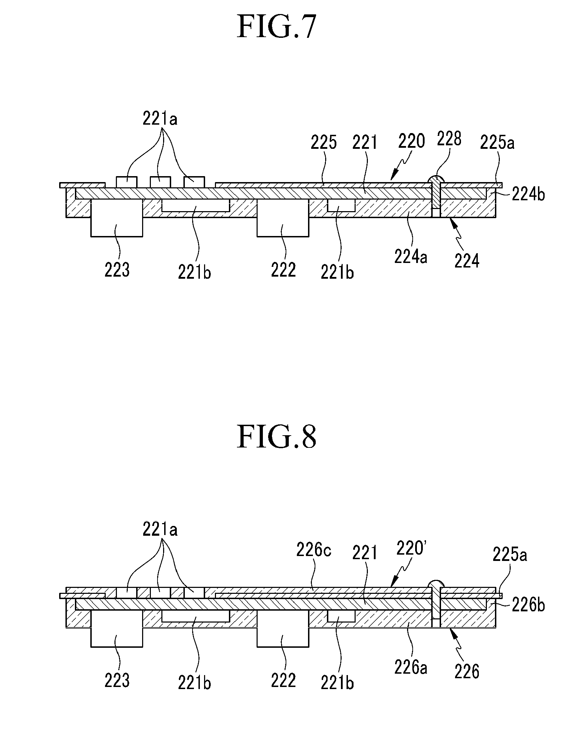

FIG. 6 is a cross-sectional view of a protective circuit module according to the third exemplary embodiment of the present invention, and FIG. 7 is a cross-sectional view of a rechargeable battery according to the third exemplary embodiment of the present invention.

Referring to FIG. 6 and FIG. 7, a rechargeable battery 102 according to the present exemplary embodiment includes an electrode assembly 110, a protective circuit module 220, and a case 160 connected to the protective circuit module 220.

The rechargeable battery 102 according to the present exemplary embodiment is formed with the same structure as the rechargeable battery of the first exemplary embodiment except for the protective circuit module 220 such that the overlapping description is omitted.

The protective circuit module 220 according to the present exemplary embodiment includes a circuit board 221 and a metal member 225 combined to the circuit board 221. A first lead tab, or electrode lead, 222, a second lead tab 223, a protective element 221b, and an outer terminal 221a are installed to the circuit board 221.

The metal member 225 is made with a plate shape and is fixed to the circuit board 221. The metal member 225 has a metal part 225a protruding outside the circuit board 221. The circuit board 221 is made with an approximate rectangle shape, and the metal part 225a is formed according to the circumference direction of the circuit board 221 and is protruded outside along the side end of the circuit board 221. The metal member 225 is fixed to the circuit board 221 by a method such as melting, and a buffer layer for insulating may be formed between the circuit board 221 and the metal member 225. Also, the protective circuit module 220 includes a resin layer 224 covering the protective element 221b and the lower surface of the circuit board 221. The resin layer 224 is formed by insert molding, and the resin layer 224 is formed to cover the protective element 221b and the lower surface and the side surface of the circuit board 221 in a state of installing the circuit board 221.

The resin layer 224 has a lower molding part 224a covering the lower surface of the circuit board 221 and a side molding part 224b protruded upward from the lower molding part 224a and enclosing the side surface of the circuit board 221. Accordingly, the protective element 221b and the circuit board 221 may be stably protected by the resin layer 224.

The first lead tab 222 and the second lead tab 223 connected and installed to the circuit board 221 protrude under the resin layer 214, the first lead tab 222 is connected to the positive electrode tab 116, and the second lead tab 223 is connected to the negative electrode tab 117.

The metal part 225a is installed to protrude further outside than the resin layer 224 and is fixed to the opening of the case 160 by a method such as the welding or melting to close and seal the case 160. Meanwhile, the protective circuit module 220 includes a sealing valve 228 sealing the electrolyte solution injecting inlet after injecting the electrolyte solution.

FIG. 8 is a cross-sectional view of a protective circuit module according to an exemplary variation according to the third exemplary embodiment of the present invention. The rechargeable battery according to the present exemplary embodiment has the same structure as the rechargeable battery according to the third exemplary embodiment except for the structure of a resin layer 226 such that the overlapping description is omitted.

A protective circuit module 220' includes a resin layer 226 covering a protective element 221b and a circuit board 221. The resin layer 226 is formed by insert molding and the resin layer 226 is formed by molding to enclose the protective element 221b and the circuit board 221 in the state of installing the circuit board 221.

The resin layer 226 includes a lower molding part 226a covering the lower surface of the circuit board 221, a side molding part 226b protruded upward from the lower molding part 226a and covering the side surface of the circuit board 221, and an upper molding part 226c formed on the side molding part 226b and covering the upper surface of the circuit board 221. The upper molding part 226c includes a hole such that the outer terminal 221a is exposed outside.

In the present exemplary embodiment, the resin layer 226 is installed to totally enclose the circuit board 221 such that the protective element 221b and the circuit board 221 may be further stably protected.

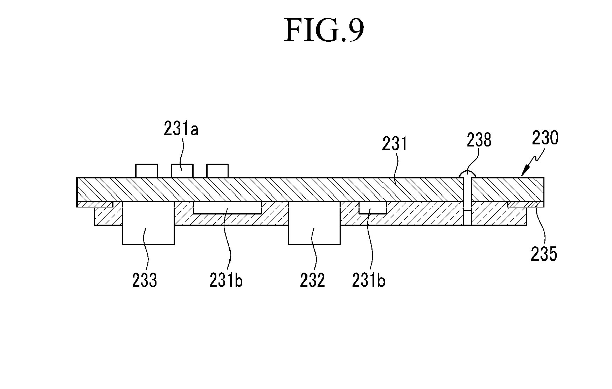

FIG. 9 is a cross-sectional view of a protective circuit module according to the fourth exemplary embodiment of the present invention.

Referring to FIG. 9, the rechargeable battery according to the present exemplary embodiment has the same structure as the rechargeable battery according to the first exemplary embodiment except for a protective circuit module 230 such that the overlapping description is omitted.

The protective circuit module 230 according to the present exemplary embodiment includes a circuit board 231 and a metal part 235 formed with a pattern shape on the surface of the circuit board 231.

A first lead tab 232, the second lead tab 233, a protective element 231b, and an outer terminal 231a are installed at the circuit board 231.

The circuit board 231 is formed as an approximate rectangle and the metal part 235 has a quadrangular shape ringing it. The metal part 235 is formed along the circumference direction of the circuit board 231, meets the outer edge of the circuit board 231, and is fixed under the side end of the circuit board. The metal part 235 may be formed of a pattern etched in the manufacturing process of the circuit board 231 or may be formed of a thin metal plate combined to the circuit board 231.

The metal part 235 is fixed to the opening of the case 160 by a method such as melting to close and seal the case 160.

Also, the protective circuit module 230 includes the protective element 231b and a resin layer 234 covering the lower surface of the circuit board 231. The resin layer 234 is formed by insert molding, and the resin layer 234 is formed to cover the protective element 231b and the lower and side surfaces of the circuit board 231 in a state of installing the circuit board 231.

The first lead tab 232 and the second lead tab 233 installed to be connected to the circuit board 231 protrude under the resin layer 234. The metal part 235 is partially covered by the resin layer 234 and protrudes further outside than the resin layer 234 thereby having an exposed portion. The exposed metal part 235 is fixed to the opening of the case 160 by a method such as welding or the melting to close and seal the case 160. Meanwhile, the protective circuit module 230 includes a sealing valve 238 sealing the electrolyte solution injecting inlet after injecting the electrolyte solution.

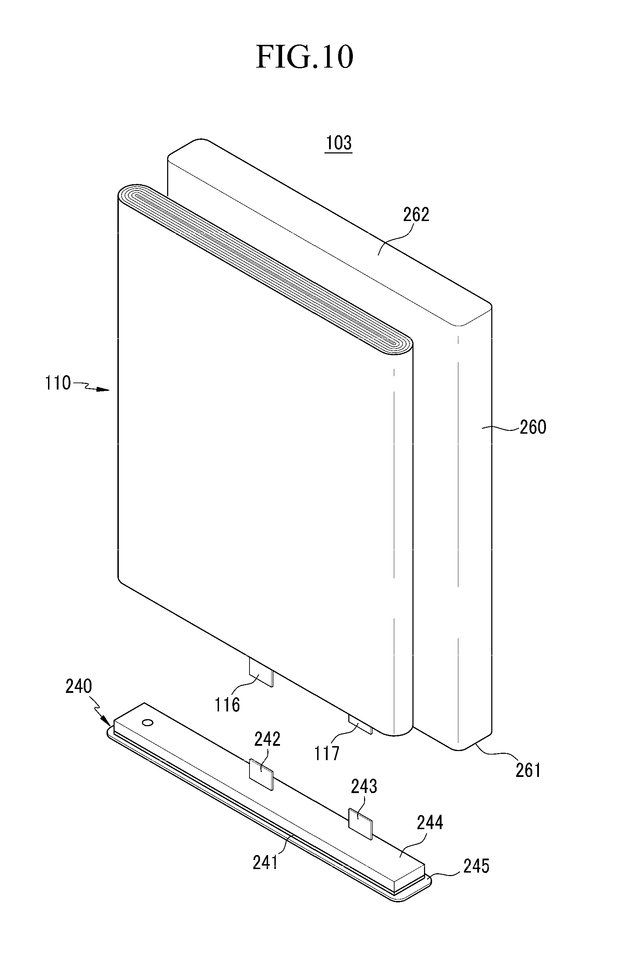

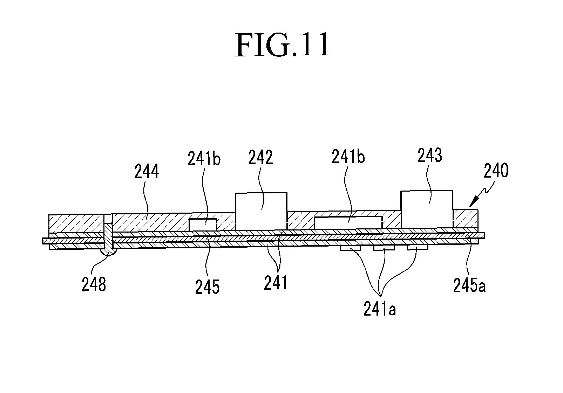

FIG. 10 is a cross-sectional view of a protective circuit module according to the fifth exemplary embodiment of the present invention, and FIG. 11 is an exploded perspective view of a rechargeable battery according to the fifth exemplary embodiment of the present invention.

Referring to FIG. 10 and FIG. 11, a rechargeable battery 103 according to the present exemplary embodiment includes an electrode assembly 110, a protective circuit module 240, and a case 260 combined to the protective circuit module 240.

The electrode assembly 110 according to the present exemplary embodiment is formed the same as the electrode assembly according to the first exemplary embodiment such that the overlapping description is omitted.

The case 260 has a space for receiving the electrode assembly 110, and includes an opening 261 that is opened at the lower portion. The case 260 is formed of a cuboid shape having a ceiling part 262. Also, the case 260 is made of a metal material and may be made of a metal including aluminum.

The protective circuit module 240 according to the present exemplary embodiment includes a circuit board 241 and a metal member 245 inserted to the circuit board 241. The metal member 245 is inserted between the circuit board 241 in the manufacturing process of the circuit board 241 thereby being integrally formed with the circuit board 241. The metal member 245 is formed with the same material as the case 160, and the metal member 245 according to the present exemplary embodiment may be made of aluminum.

The circuit board 241 is installed with a first lead tab 242, a second lead tab 243, a protective element 241b, and an outer terminal 241a.

The metal member 245 is formed with a plate shape and has a metal part 245a protruded outside the circuit board 241. The metal part 125a is integrally formed with the metal member 245 and is formed along the side end of the metal member 245. The circuit board 241 is formed as an approximate rectangle, and the metal part 245a is formed along the circumference direction of the circuit board 241 and protrudes further outside than the side end of the circuit board 241.

The metal part 245a is fixed to the opening 261 of the case 260 by a method such as welding or melting to close and seal the case 260. In the present exemplary embodiment, the opening 261 is formed under the case 260 such that the protective circuit module 240 seals the case 260 under such it may be stably sealed without an additional cover.

Also, the protective circuit module 240 includes the protective element 241b and a resin layer 244 covering the upper surface of the circuit board 241. The resin layer 244 is formed through insert molding, and the resin layer 244 is molded to cover the protective element 241b and the upper surface of the circuit board 241 in the state of installing the circuit board 241.

The first lead tab 242 and the second lead tab 243 connected and installed to the circuit board 241 protrude from the resin layer 244, the first lead tab 242 is connected to the positive electrode tab 116, and the second lead tab 243 is connected to the negative electrode tab 117.

The metal part 245a is installed to protrude further outside than the resin layer 244 and is fixed to the opening of the case 160 by a method such as welding or melting to close and seal the case 160. Meanwhile, the protective circuit module 240 includes a sealing valve 248 sealing the electrolyte solution injecting inlet after it is injected with the electrolyte solution.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery comprising:
an electrode assembly,
a case for receiving the electrode assembly; and
a protective circuit module for closing an opening of the case comprising a circuit board having a protective element mounted thereto and a metal member coupled to the opening of the case to seal the case.

2. The rechargeable battery of claim 1, wherein the metal member is arranged around a periphery of the circuit board.

3. The rechargeable battery of claim 1 or 2, further comprising a resin layer (124) covering the protective element and a first surface of the circuit board to which the protective element is mounted, the first surface facing the electrode assembly.

4. The rechargeable battery of claim 3, further comprising an electrolyte solution injecting inlet 129 passing through the circuit board and the resin layer.

5. The rechargeable battery of any one of the preceding claims, wherein the circuit board comprises first and second plates (126, 127) and the metal member comprises a metal layer (125) arranged between the plates.

6. The rechargeable battery of claim 5, wherein the metal layer protrudes beyond edges of the circuit board for connection to an exposed edge of the case.

7. The rechargeable battery of any one of claims 1 to 4, wherein the metal member (215) comprises an insert around the periphery of the circuit board, wherein a portion of the insert protrudes beyond edges of the circuit board for connection to an exposed edge of the case.

8. The rechargeable battery of any one of claims 1 to 4, wherein the metal member (225) is a substantially planar member fixed to a second surface of the circuit board opposite the first surface and protruding beyond the periphery of the circuit board for connection to an exposed top edge of the case.

9. The rechargeable battery of claim 8, when dependent on claim 2, wherein the resin layer covers the first surface of the circuit board and side surfaces of the circuit board.

10. The rechargeable battery of claim 8 or 9, comprising a second resin layer (226c) on the second surface of the circuit board and the planar metal member.

11. The rechargeable battery of any one of claims 1 to 4, wherein the metal member (235) is formed on a first surface of the circuit board facing the electrode assembly, the edge of the metal member not extending beyond the edge of the circuit board.

12. The rechargeable battery of claim 11, wherein the metal member comprises a pattern etched on the circuit board or a metal plate mounted to the circuit board.

13. The rechargeable battery of any one of the preceding claims wherein the metal member and the case comprise the same material.

14. The rechargeable battery of any one of the preceding claims when dependent on claim 3, comprising electrode leads protruding through the resin for connection to electrode tabs of the electrode assembly.
